# EUROPÄISCHE PATENTSCHRIFT

(11) **EP 2 260 993 B1**
(45) Veröffentlichungstag und Bekanntmachung des Hinweises auf die Patenterteilung: **05.04.2017**
(21) Anmeldenummer: 10165699.9
(22) Anmeldetag: 11.06.2010
(51) Int. Cl.: B29C 33/06, B29C 45/00, B29C 35/08

(54) **Spritzgusswerkzeug**
Injection moulding tool
Outil de moulage par injection

(30) Priorität: 12.06.2009 DE 102009026916
(43) Veröffentlichungstag der Anmeldung: 15.12.2010
(73) Patentinhaber: Robert Bosch GmbH, 70442 Stuttgart (DE)
(72) Erfinder: Raisch, Sven Robert, 70565, Stuttgart (DE); Schmiederer, Dirk, 71334, Waiblingen (DE); Bald, Rolf, 71642, Ludwigsburg (DE)

(56) Entgegenhaltungen:
- WO-A1-98/00274
- DE-A1- 1 629 163
- DE-A1- 19 802 855
- DE-A1-102006 023 383
- DE-A1-102007 027 586
- US-A- 5 248 864
- US-A- 5 338 497
- US-A- 5 483 043
- US-A1- 2009 127 253

## Beschreibung

Die vorliegende Erfindung betrifft, ein Spritzgussverfahren zur Herstellung eines Formteils, ein Spritzgusswerkzeug, sowie deren Verwendung.

### Stand der Technik

Beim Spritzgießen wird eine heiße Polymerschmelze zur Formgebung in ein temperiertes Spritzgusswerkzeug gespritzt. Das Erwärmen und Aufschmelzen des Polymers erfolgt dabei in der Plastifiziereinheit.

Beim Kontakt mit der Oberfläche des Spritzgusswerkzeugs wird das Polymer herkömmlicherweise bereits während des Formfüllvorgangs abgekühlt, was eine Verengung des Fließkanals und eine Erhöhung des Druckverlusts zur Folge hat. Dies erfolgt umso schneller, je geringer die Wandstärke des herzustellenden Formteils und umso höher die Wärmeabfuhr aus dem Polymer ist und beschränkt das Verhältnis von maximaler Fließweglänge zur Wandstärke (Aspektverhältnis). Zudem führen ein erhöhter Druckverlust und eine verminderte Schmelzetemperatur über die Fließweglänge zu einer verminderten Abformung von Oberflächenstrukturen.

Um durch Mehrkomponentenspritzgießen einen stoffschlüssigen Verbund zwischen zwei Kunststoffkomponenten zu erzielen, sind unter anderem die Kontakttemperatur und der Druck an der Kontaktfläche für einen guten Verbund ausschlaggebend, so dass eine schnelle Wärmeabfuhr zu einem unzureichenden Verbund führen kann. Dies gilt auch für die Bindenahtfestigkeit, wenn zwei Schmelzefronten, beispielsweise nach dem Umfließen eines Kerns, aufeinander treffen.

Eine hohe Abkühlgeschwindigkeit führt zudem zu einer Verminderung des Kristallisationsgrads bei teilkristallinen Polymeren, welche unter anderem die mechanischen Eigenschaften, wie Festigkeit, Steifigkeit sowie die tribologischen Eigenschaften, negativ beeinflusst.

Um einem schnellen Erstarren des Polymers entgegenzuwirken werden herkömmlicherweise Polymerschmelzen mit einer hohen Temperatur, beheizte Spritzgusswerkzeuge oder Werkzeugeinsätze mit geringerer Wärmeleitfähigkeit eingesetzt.

So beschreibt die Druckschrift EP 1 925 421 A1 ein beheizbares Spritzgusswerkzeug, welches eine Kavität, eine elektrische Spule und ein die Kavität begrenzendes Element aufweist, wobei das Element unter dem Einfluss des elektromagnetischen Feldes der Spule Wärmeenergie generiert.

Ferner offenbart die DE 10 2006 023381 A1 ein Verfahren und eine Vorrichtung zur Herstellung von Kunststoffteilen sowie thermoplastischer Kunststoff-Formmassen. Dabei enthält die Formmasse Partikel, die sich bei Einwirkung elektromagnetischer Wechselfelder erwärmen. Die Formmasse wird in fließfähigem Zustand in eine Form-Kavität eingespritzt. Elektromagnetische Wechselfelder wirken mindestens in Teilen der Kavität ein, so dass Wärme direkt an den Partikeln in der Formmasse erzeugt wird. Wenigstens Teile der Form sind so ausgebildet, dass sie sich durch Einwirkung der Felder im Wesentlichen nicht oder weniger als die Formmasse erwärmen.

Der Einsatz von Polymerschmelzen mit einer hohen Temperatur, beheizten Spritzgusswerkzeugen oder Werkzeugeinsätzen mit geringerer Wärmeleitfähigkeit geht jedoch meist mit einer langen Kühlphase beziehungsweise Aufwärmphase, und damit einer langen Zykluszeit einher.

### Offenbarung der Erfindung

Gegenstand der vorliegenden Erfindung ist ein Spritzgussverfahren zur Herstellung eines Formteils, insbesondere eines Formteils mit einem hohen Aspektverhältnis und/oder eines Mehrkomponenten-Formteils, mit einem Spritzgusswerkzeug, umfassend mindestens eine formgebende Kavität und mindestens eine elektrische Spule, wobei die Spule benachbart zu der Kavität angeordnet ist, in dem
- ein thermoplastisches Polymer, welches mindestens einen elektrisch leitfähigen und/oder magnetischen Füllstoff umfasst, als Spritzgussmaterial eingesetzt wird,
- die Kavität mit dem Spritzgussmaterial zumindest teilweise gefüllt wird, und
- das Spritzgussmaterial in der Kavität durch Anlegen einer Wechselspannung an die Spule beheizt wird, wobei als Spule mindestens ein Helmholz-Spulen-Paar verwendet wird, wobei die Spulen des Helmholtz-Spulen-Paares jeweils benachbart zu gegenüberliegenden Seiten der Kavität angeordnet sind.

Durch Anlegen einer Wechselspannung an die Spule können - im Fall eines elektrisch leitfähigen Füllstoffs Wirbelströme und im Fall eines magnetischen Füllstoffs Hysterese-Effekte in dem Füllstoff erzeugt werden, durch welche das Spritzgussmaterial beheizt, insbesondere erwärmt, werden kann. Dies hat den Vorteil, dass der Abkühlung des Spritzgussmaterials durch den Kontakt mit der Kavitätswand entgegengewirkt und somit ein frühzeitiges Erstarren des Polymers verhindert werden kann. Da auf diese Weise das Spritzgussmaterial als solches gezielt beheizt werden kann, wobei insbesondere auf das Beheizen des Spritzgusswerkzeugs als solches verzichtet werden kann, kann das Verfahren vorteilhafterweise eine kürzere Kühlphase, eine kürzere Aufwärmphase und eine geringere Zykluszeit aufweisen als herkömmliche Verfahren. Weiterhin können mit dem Verfahren bestimmte lokale Bereiche, insbesondere innerhalb des Spritzgussmaterials, beheizt werden. Zudem kann durch das Verfahren eine verbesserte Fließfähigkeit, ein hohes Aspektverhältnis, eine verbesserte Abformung von Oberflächenstrukturen, eine Erhöhung des Kristallisationsgrads, eine Erhöhung der Stoffschlüssigkeit und/oder Mediendichtigkeit eines Werkstoffverbunds beim Mehrkomponentenspritzgießen beziehungsweise von Bindenähten und/oder eine Erhöhung des Ausrichtungsgrads, beispielsweise von kunststoffgebundenen Dauermagneten, erreicht werden.

Durch das Verfahren kann das Spritzgussmaterial sowohl kontinuierlich als auch impulsartig diskontinuierlich beheizt werden. Beispielsweise kann in dem Verfahren das Spritzgussmaterial zur Aufrechterhaltung einer Schmelze und/oder zur Verzögerung der Verfestigung, insbesondere Kristallisation und/oder Erstarrung, einer Schmelze und/oder zum Verflüssigen einer verfestigten Schmelze beheizt werden. Insbesondere kann das Spritzgussmaterial in dem Verfahren erwärmt werden. Beispielsweise kann das Spritzgussmaterial in dem Verfahren zum Verflüssigen einer verfestigten Schmelze erwärmt werden.

Als elektrisch leitfähiger und/oder magnetischer Füllstoff kann beispielsweise ein Füllstoff eingesetzt werden, der einen spezifischen elektrischen Widerstand, insbesondere bei Temperaturen von ≥ 20 °C bits ≤ 450 °C, von weniger als 1,5·10⁻⁶ Ωm und/oder der eine magnetische Permeabilität von mehr als 1,2 aufweist.

Zum Beispiel kann der elektrisch leitfähige und/oder magnetische Füllstoff ein ferromagnetischer Füllstoff sein. Insbesondere kann der elektrisch leitfähige und/oder magnetische Füllstoff aus Kupfer, Eisen, Nickel und/oder Legierungen, beispielsweise aus Ferrit oder Austenit, ausgebildet sein.

Vorzugsweise liegt der elektrisch leitfähige und/oder magnetische Füllstoff, insbesondere feindispers, verteilt in dem thermoplastischen Polymer vor. Insbesondere kann der elektrisch leitfähige und/oder magnetische Füllstoff eine Partikelgröße von ≥ 10 nm bis ≤ 10 mm aufweisen. Dabei können die Partikel sowohl rund, plättchenförmig als auch faserförmig ausgebildet sein.

Zur Herstellung eines Mehrkomponenten-Formteils kann weiterhin mindestens ein thermoplastisches Polymer, welches keine oder, insbesondere nur, elektrisch nichtleitfähige und unmagnetische Füllstoffe, umfasst, als zusätzliches Spritzgussmaterial eingesetzt werden. Das thermoplastische Polymer des zusätzlichen Spritzgussmaterials kann dabei beispielsweise Füllstoffe umfassen, welche einen spezifischen elektrischen Widerstand, insbesondere bei Temperaturen von ≥ 20 °C bis ≤ 450 °C, von mehr als 1,5·10⁻⁶ Ωm, beispielsweise von mehr als 20·10⁻⁶ Ωm, insbesondere von mehr als 1-10¹⁰ Ωm, und die eine magnetische Permeabilität von weniger als 1,2 aufweisen. Auf diese Weise können beim Mehrkomponentenspritzguss einige Spritzgussmaterialien, nämlich die Spritzgussmaterialien, welche elektrisch leitfähige und/oder magnetische Füllstoffe umfassen, gezielt beheizt, insbesondere erwärmt, werden, während andere Spritzgussmaterialien, nämlich die Spritzgussmaterialien, welche keine oder nur elektrisch nichtleitfähige und unmagnetische Füllstoffe umfassen, nicht direkt beheizt beziehungsweise erwärmt werden. Zum Beispiel kann auf diese Weise eine erste bereits erstarrte thermoplastische Komponente, welche elektrisch leitfähige und/oder magnetische Füllstoffe umfasst, wieder erwärmt werden.

Im Rahmen einer bevorzugten Ausführungsform wird das Spritzgussmaterial während des Füllens und/oder im Anschluss an das Füllen und/oder nach dem Füllen, beispielsweise nach dem Füllen mit einem ersten Spritzgussmaterial, beheizt (Induktionsphase). Durch Beheizen während des Füllens und/oder im Anschluss an das Füllen kann beispielsweise ein hoher Kristallisationsgrad erzielt werden. Durch Beheizen nach dem Füllen kann beispielsweise ein erstes, bereits verfestigtes Spritzgussmaterial, vorzugsweise lokal, wieder erwärmt werden, um einen Verbund mit einem zweiten, zu einem späteren Zeitpunkt in die Kavität eingefüllten Spritzgussmaterial auszubilden.

Im Rahmen einer weiteren, bevorzugten Ausführungsform wird die Tiefe der Beheizung (Beheizungstiefe) über die Frequenz der Wechselspannung und/oder über die Stromstärke und/oder über die Dauer der Stromzufuhr eingestellt. Da die Beheizungstiefe von der Frequenz der Wechselspannung abhängt, kann durch eine hochfrequente Wechselspannung die Oberfläche des Spritzgussmaterials gezielt beheizt werden. Dies hat beispielsweise beim Mehrkomponentenspritzguss den Vorteil, dass eine erhöhte Kontakttemperatur zu einem thermoplastischen Polymer, welches keine, mit einem elektromagnetischen Feld wechselwirkende Füllstoffe, umfasst, erzielt und somit eine erhöhte Verbundfestigkeit erreicht werden kann.

In dem Verfahren kann ein Spritzgusswerkzeug eingesetzt werden, welches mehrere Kavitäten (Mehrfachspritzgusswerkzeug) und/oder mehrere Spulen aufweist. Vorzugsweise wird in dem Verfahren ein Spritzgusswerkzeug eingesetzt, welches mindesten zwei zu der Kavität beziehungsweise den Kavitäten benachbart angeordnete Spulen aufweist. Die Spule beziehungsweise die Spulen sind dabei vorzugsweise derart benachbart zu der Kavität beziehungsweise den Kavitäten angeordnet, dass das elektromagnetische Feld der Spule beziehungsweise der Spulen mit dem elektrisch leitfähigen und/oder magnetischen Füllstoffe beziehungsweise den elektrisch leitfähigen und/oder magnetischen Füllstoffen eines in der Kavität beziehungsweise in den Kavitäten befindlichen Spritzgussmaterials wechselwirken kann. Zum Beispiel kann eine Kavität, insbesondere jeweils eine Kavität, zwischen zwei Spulen angeordnet sein. Es ist jedoch ebenso möglich, dass mehrere Kavitäten zwischen zwei Spulen angeordnet sind. In dem Verfahren kann ein Spritzgusswerkzeug, welches weiterhin einen in die Kavität mündenden Kanal, insbesondere Angusskanal oder Heißkanal, aufweist, verwendet werden. Über diesen Kanal kann die Kavität im Rahmen des Verfahrens teilweise oder vollständig gefüllt werden.

Durch ein erfindungsgemäßes Verfahren hergestellte Spritzgussformteile können vorteilhafterweise ein hohes Aspektverhältnis aufweisen und/oder als Mehrkomponenten-Formteil ausgebildet sein. Durch eine verzögerte Abkühlung in der Randschicht können derartige Spritzgussformteile beispielsweise ein sphärolithisches Gefüge und/oder eine geringere Orientierung in der Spritzrichtung aufweisen.

Ein weiterer Gegenstand der vorliegenden Erfindung ist ein Spritzgusswerkzeug, gemäß dem unabhängigen Anspruch 4, insbesondere zur Durchführung eines erfindungsgemäßen Verfahrens, welches mindestens eine formgebende Kavität und mindestens eine elektrische Spulen umfasst, wobei die Spule benachbart zu der Kavität angeordnet ist, wobei der Bereich des Werkzeugs, welcher zwischen der Spule und der Kavität angeordnet ist, aus einem unmagnetischen und elektrisch nichtleitfähigen Material ausgebildet ist. Beispielsweise kann dieser Bereich aus einem Material mit einem spezifischen elektrischen Widerstand, insbesondere bei Temperaturen von ≥ 20 °C bis ≥ 450 °C, von mehr als 1,5·10⁻⁶ Ωm, beispielsweise von mehr als 20·10⁻⁶ Ωm, insbesondere von mehr als 1·10¹⁰ Ωm, und mit einer magnetischen Permeabilität von weniger als 1,2 ausgebildet sein. Zum Beispiel kann dieser Bereich aus einem Polymer oder einer Keramik, beispielsweise Zirkoniumoxid (ZrO₂), Aluminiumoxid (Al₂O₃), Aluminiumnitrid (AlN), Borcarbid (B₄C), Siliziumnitrid (Si₃N₄) und/oder Titandiborid (TiB₂), insbesondere Zirkoniumoxid (ZrO₂) und/oder Aluminiumoxid (Al₂O₃), ausgebildet sein. Auf diese Weise wird das Magnetfeld beziehungsweise das elektromagnetische Feld der Spule vorteilhafterweise nicht oder nur geringfügig durch diesen Bereich gestört. Der Bereich des Werkzeugs, welcher zwischen der Spule und der Kavität angeordneten ist, kann weiterhin vorzugsweise aus einem Material mit einer Wärmeleitfähigkeit von größer oder gleich 1 W/m·K, beispielsweise von ≥ 10 W/m·K bis ≤ 400 W/m·K, ausgebildet sein. Hierdurch kann vorteilhafterweise eine schnelle Abkühlung nach Beendigung des induktiven Beheizens (Induktionsphase) erzielt werden.

Das Spritzgusswerkzeug kann beispielsweise zum Beheizen beziehungsweise Erwärmen einer Schmelze, insbesondere zur Aufrechterhaltung einer Schmelze und/oder zur Verzögerung der Verfestigung, insbesondere Kristallisation und/oder Erstarrung, einer Schmelze und/oder zum Erwärmen beziehungsweise Verflüssigen einer verfestigten Schmelze eingesetzt werden.

Das Spritzgusswerkzeug kann mehrere Kavitäten (Mehrfachspritzgusswerkzeug) und/oder mehrere Spulen aufweisen. Das Spritzgusswerkzeug weist mindestens zwei zu der Kavität beziehungsweise den
Kavitäten benachbart angeordnete Spulen auf. Die Spule beziehungsweise die Spulen sind dabei vorzugsweise derart benachbart zu der Kavität beziehungsweise den Kavitäten angeordnet, dass das elektromagnetische Feld der Spule beziehungsweise der Spulen mit dem Füllstoff beziehungsweise den Füllstoffen eines in der Kavität beziehungsweise in den Kavitäten befindlichen Spritzgussmaterials wechselwirken können. Zum Beispiel kann eine Kavität, insbesondere jeweils eine Kavität, zwischen zwei Spulen angeordnet sein. Es ist jedoch ebenso möglich, dass mehrere Kavitäten zwischen zwei Spulen angeordnet sind.

Vorzugsweise sind die Spule/n in der Nähe der Kavität, also kavitätsnah, in das Spritzgusswerkzeug integriert oder integrierbar. Erfindungsgemäß können zwei Spulen jeweils benachbart zu gegenüberliegenden Seiten einer Kavität angeordnet beziehungsweise in das Spritzgusswerkzeug integriert oder integrierbar sein. Insbesondere ist die Kavität dabei zwischen den Spulen angeordnet. Vorzugsweise sind die Spulen aus einem elektrisch leitfähigen Material, beispielsweise Kupfer, ausgebildet. Die Spulen sind erfindungsgemäß Helmholtz-Spulen.

Erfindungsgemäß umfasst das Spritzgusswerkzeug mindestens eine Helmholz-Spulen-Paar. Die Spulen des Helmholtz-Spulen-Paars sind dabei jeweils benachbart zu gegenüberliegenden Seiten der Kavität angeordnet.

Im Rahmen einer weiteren, bevorzugten Ausführungsform weist das Werkzeug mindestens einen Werkzeugeinsatz auf, wobei der Werkzeugeinsatz zumindest einen Teil der Wandung der Kavität bildet und wobei mindestens eine Spule in den Werkzeugeinsatz integriert oder integrierbar ist. Beispielsweise kann das Werkzeug mindestens zwei Werkzeugeinsätze aufweisen. Insbesondere kann in jedem Werkzeugeinsatz eine Spule integriert oder integrierbar sein. Die Werkzeugeinsätze sind vorzugsweise aus einem unmagnetischen und elektrisch nichtleitfähigen Material ausgebildet sein. Beispielsweise können die Werkzeugeinsätze aus einem Material mit einem spezifischen elektrischen Widerstand, insbesondere bei Temperaturen von ≥ 20 °C bis ≤ 450 °C, von mehr als 1,5·10⁻⁶ Ωm,
beispielsweise von mehr als 20·10⁻⁶ Ωm, insbesondere von mehr als 1·10¹⁰ Ωm, und mit einer magnetischen Permeabilität von weniger als 1,2 ausgebildet sein. Zum Beispiel können die Werkzeugeinsätze aus einem Polymer oder einer Keramik, beispielsweise Zirkoniumoxid (ZrO₂), Aluminiumoxid (Al₂O₃), Aluminiumnitrid (AlN), Borcarbid (B₄C), Siliziumnitrid (Si₃N₄) und/oder Titandiborid (TiB₂), insbesondere Zirkoniumoxid (ZrO₂) und/oder Aluminiumoxid (Al₂O₃), ausgebildet sein. Weiterhin vorzugsweise können die Werkzeugeinsätze aus einem Material mit einer Wärmeleitfähigkeit von größer oder gleich 1 W/m.K, beispielsweise von ≥ 10 W/m·K bis ≤ 400 W/m·K, ausgebildet sein. Hierdurch kann vorteilhafterweise eine schnelle Abkühlung nach Beendigung des induktiven Beheizens (Induktionsphase) erzielt werden.

Das Spritzgusswerkzeug kann mindestens zwei Werkzeugteile zur Begrenzung der Kavität umfassen. Insbesondere kann das Spritzgusswerkzeug zwei, in einer Trennebene aneinander stoßende Werkzeugteile aufweisen, welche die Kavität ausbilden beziehungsweise begrenzen.

Im Rahmen der vorliegenden Erfindung kann/können die Spule/n beziehungsweise Werkzeugeinsätze nur in einem Werkzeugteil oder in unterschiedlichen Werkzeugteilen integriert oder integrierbar sein.

Zusätzlich dazu können eine oder mehrere Spulen entlang des Fließweges des Spritzgussmaterials angeordnet sein. Insbesondere können eine oder mehrere Spulen in bestimmten Positionen entlang des Fließweges des Spritzgussmaterials angeordnet sein. Diese können beispielsweise zu einer lokal verbesserten Abformung von Oberflächenstrukturen, zu einer lokalen Erhöhung des Kristallisationsgrads, zu einer lokalen Erhöhung der Stoffschlüssigkeit eines Werkstoffverbunds beziehungsweise von Bindenähten beim Mehrkomponentenspritzgießen und/oder zur lokalen Erhöhung der Füllstoffausrichtung beispielsweise beim Spritzgießen von kunststoffgebundenen Dauermagneten genutzt werden.

Im Rahmen einer weiteren, bevorzugten Ausführungsform umfasst das Spritzgusswerkzeug zwei Werkzeugteile zur Begrenzung der Kavität, wobei jeweils mindestens eine Spule in ein Werkzeugteil integriert oder integrierbar ist.

Das Spritzgusswerkzeug kann weiterhin eine Kühlvorrichtung zur Kühlung der Spulen aufweisen. Auf diese Weise kann gewährleistet werden, dass eine Erwärmung der Spulen bei deren Betrieb kaum einen beziehungsweise keinen Einfluss auf das Spritzgussmaterial hat und das Beheizen des Spritzgussmaterials, vorzugsweise ausschließlich, induktiv erfolgt.

Weiterhin kann das Spritzgusswerkzeug einen in die Kavität mündenden Kanal, insbesondere Angusskanal oder Heißkanal, zum Befüllen der Kavität aufweisen.

Ein weiterer, nicht beanspruchter, Gegenstand ist ein Spritzgusswerkzeugeinsatz, insbesondere zur Durchführung eines erfindungsgemäßen Verfahrens, der eine kavitätsbegrenzende Oberfläche und mindestens eine elektrische Spule, beispielsweise eine Helmholtz-Spule oder eine spiralförmige Spule, umfasst, wobei die Spule benachbart zu der kavitätsbegrenzenden Oberfläche angeordnet ist und wobei der Bereich des Werkzeugeinsatzes, welcher zwischen der Spule und der kavitätsbegrenzenden Oberfläche angeordnet ist, aus einem unmagnetischen und elektrisch nichtleitfähigen Material ausgebildet ist. Beispielsweise kann der Spritzgusswerkzeugeinsatz aus einem Material mit einem spezifischen elektrischen Widerstand, insbesondere bei Temperaturen von ≥ 20 °C bis ≤ 450 °C, von mehr als 1,5·10⁻⁶ Ωm, beispielsweise von mehr als 20·10⁻⁶ Ωm, insbesondere von mehr als 1·10¹⁰ Ωm, und mit einer magnetischen Permeabilität von weniger als 1,2 ausgebildet sein. Zum Beispiel kann der Spritzgusswerkzeugeinsatz aus einem Polymer oder einer Keramik, beispielsweise Zirkoniumoxid (ZrO₂), Aluminiumoxid (Al₂O₃), Aluminiumnitrid (AlN), Borcarbid (B₄C), Siliziumnitrid (Si₃N₄) und/oder Titandiborid (TiB₂), insbesondere Zirkoniumoxid (ZrO₂) und/oder Aluminiumoxid (Al₂O₃), ausgebildet sein. Weiterhin vorzugsweise kann der Spritzgusswerkzeugeinsatz aus einem Material mit einer Wärmeleitfähigkeit von größer oder gleich 1 W/m·K, beispielsweise von ≥ 10 W/m·K bis ≤ 400 W/m·K, ausgebildet sein. Hierdurch kann vorteilhafterweise eine schnelle Abkühlung nach Beendigung des induktiven Beheizens (Induktionsphase) erzielt werden. Die Spule kann in dem Spritzgusswerkzeugeinsatz integriert oder integrierbar sein. Weiterhin kann der Spritzgusswerkzeugeinsatz eine Aussparung zum Ausbilden eines Kanals, insbesondere Angusskanals oder Heißkanal, zum Befüllen der Kavität aufweisen.

Der Spritzgusswerkzeugeinsatz kann vorteilhafterweise zum Beheizen beziehungsweise Erwärmen einer Schmelze, insbesondere zur Aufrechterhaltung einer Schmelze und/oder zur Verzögerung der Verfestigung, insbesondere Kristallisation und/oder Erstarrung, einer Schmelze und/oder zum Erwärmen beziehungsweise Verflüssigen einer verfestigten Schmelze eingesetzt werden.

Ein weiterer Gegenstand der vorliegenden Erfindung ist die Verwendung eines erfindungsgemäßen Spritzgusswerkzeugs und/oder eines erfindungsgemäßen Verfahrens zur Herstellung eines Einkomponenten-Formteils und/oder eines Mehrkomponenten-Formteils, insbesondere mit einem hohem Aspektverhältnis. Beispielsweise kann ein erfindungsgemäßes Spritzgusswerkzeug und/oder Verfahren zur Herstellung von Zahnrädern, spritzgegossenen Leiterbahnen, Gehäusen und/oder Deckeln, und/oder zum Spritzgießen von kunststoffgebundenen Dauermagneten verwendet werden.

Ein weiterer Gegenstand der vorliegenden Erfindung ist die Verwendung eines thermoplastischen Polymers, welches mindestens einen elektrisch leitfähigen und/oder magnetischen Füllstoff umfasst, als Spritzgussmaterial, insbesondere zur Durchführung eines erfindungsgemäßen Verfahrens, zum Beispiel zur Herstellung eines Einkomponenten-Formteils und/oder eines Mehrkomponenten-Formteils, beispielsweise mit einem hohem Aspektverhältnis. Vorzugsweise weist der Füllstoff einen spezifischen elektrischen Widerstand, insbesondere bei Temperaturen von ≥ 20 °C bis ≤ 450 °C, von weniger als 1,5·10⁻⁶ Ωm und/oder eine magnetische Permeabilität von mehr als 1,2 auf. Zum Beispiel kann der Füllstoff ein ferromagnetischer Füllstoff sein. Insbesondere kann der Füllstoff aus Kupfer, Eisen, Nickel und/oder Legierungen, beispielsweise aus Ferrit oder Austenit, ausgebildet sein.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht ist, die Erfindung in irgendeiner Form einzuschränken. Es zeigen
- Fig. 1: eine schematische, perspektivische Ansicht einer ersten Ausführungsform eines erfindungsgemäßen Spritzgusswerkzeugs;
- Fig. 2a: ein schematischer, Querschnitt durch die Ebene A-A einer zweiten Ausführungsform eines erfindungsgemäßen Spritzgusswerkzeugs; und
- Fig. 2b: ein schematischer, Querschnitt durch die Ebene B-B der in Fig. 2a gezeigten, zweiten Ausführungsform eines erfindungsgemäßen Spritzgusswerkzeugs.

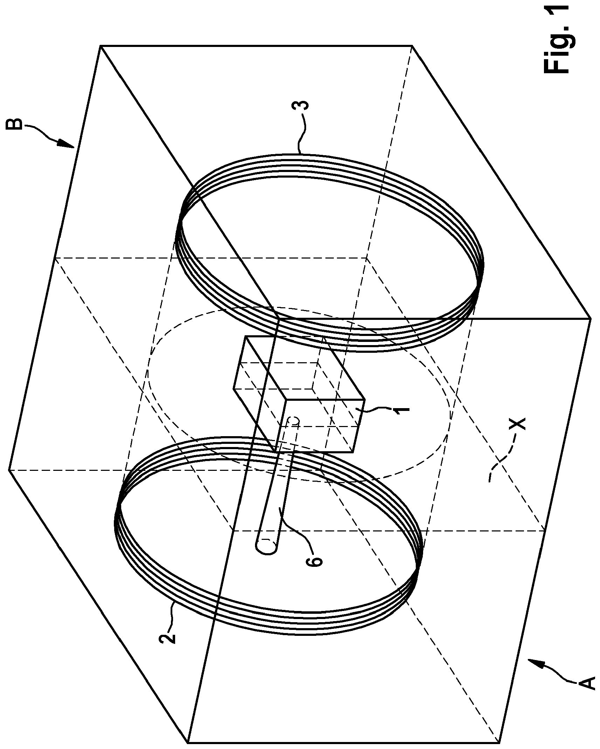

Figur zeigt eine schematische, perspektivische Ansicht einer ersten Ausführungsform eines erfindungsgemäßen Spritzgusswerkzeugs, welches zwei Werkzeugteil A, B aufweist, welche in einer Trennebene X aneinander stoßende und eine formgebende Kavität 1 begrenzen. Figur 1 veranschaulicht, dass in jedes der Werkzeugteile A, B eine Spule 2, 3 eines Helmholtz-Spulen-Paares 2, 3 integriert ist. Die Spulen 2, 3 sind dabei benachbart zu gegenüberliegenden Seiten der Kavität 1 angeordnet und kavitätsnah in das Spritzgusswerkzeug integriert. Die Kavität 1 ist dabei zwischen den Spulen 2, 3 angeordnet. Dabei schneidet die Trennebene X die Kavität 1. In die Kavität 1 mündet ein Angusskanal 6 zum Befüllen der Kavität 1. Im Rahmen dieser Ausführungsform sind beide Werkzeugteile A, B des Spritzgusswerkzeugs aus einem Material mit einer geringen magnetischen beziehungsweise elektromagnetischen Wechselwirkung und einer hohen Wärmeleitfähigkeit ausgebildet.

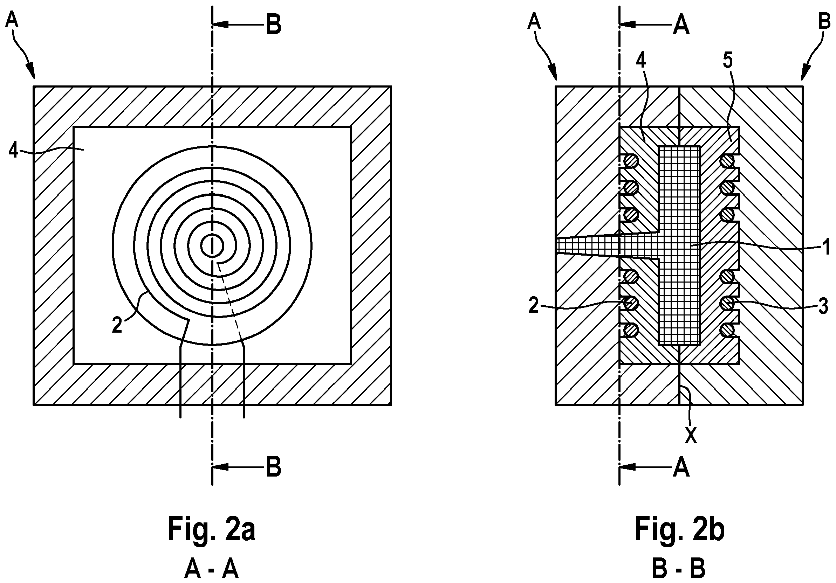

Die Figuren 2a und 2b zeigen schematische Querschnitte durch eine zweite Ausführungsform eines erfindungsgemäßen Spritzgusswerkzeugs, welches zwei Werkzeugteile A, B zur Begrenzung einer Kavität 1 aufweist, wobei jedes der Werkzeugteile A, B eine spiralförmige Spule 2, 3 umfasst. Im Rahmen dieser Ausführungsform sind die Spulen 2, 3 dabei jeweils in einen Werkzeugeinsatz 4, 5 integriert, wobei die Werkzeugeinsätze 4, 5 wiederum jeweils in eines der Werkzeugteile A, B integriert sind. Die Werkzeugeinsätze 4, 5 bilden jeweils eine Hälfte der Wandung der Kavität 1 und sind dabei aus einem Material mit einer geringen magnetischen beziehungsweise elektromagnetischen Wechselwirkung und einer hohen Wärmeleitfähigkeit ausgebildet. Die übrigen Bereiche der Werkzeugteile A, B können dabei aus anderen Materialien ausgebildet sein.

## Patentansprüche

1. Spritzgussverfahren zur Herstellung eines Formteils mit einem Spitzgusswerkzeug, umfassend mindestens eine formgebende Kavität (1) und mindestens eine elektrische Spule (2, 3), wobei die Spule (2, 3) benachbart zu der Kavität (1) angeordnet ist, indem
- ein thermoplastisches Polymer, welches mindestens einen elektrisch leitenden und/oder einen magnetischen Füllstoff umfasst, als Spritzgussmaterial eingesetzt wird,
- die Kavität (1) mit dem Spritzgussmaterial zumindest teilweise gefüllt wird,
- und das Spritzgussmaterial in der Kavität (1) durch Anlegen einer Wechselspannung an die Spule (2,3) beheizt wird, **dadurch gekennzeichnet, dass** als Spule mindestens ein Helmholz-Spulen-Paar (2, 3) verwendet wird, und dass die Spulen (2,3) des Helmholtz-Spulen-Paares (2, 3) jeweils benachbart zu gegenüberliegenden Seiten der Kavität (1) angeordnet sind.

2. Spritzgussverfahren nach Anspruch 1, **dadurch gekennzeichnet, dass** das Spritzgussmaterial während des Füllens und/oder im Anschluss an das Füllen und/oder nach dem Füllen beheizt wird.

3. Spritzgussverfahren nach Anspruch 1 oder 2, **dadurch gekennzeichnet, dass** die Tiefe des Beheizens durch die Frequenz der Wechselspannung und/oder über die Stromstärke und/oder über die Dauer der Stromzufuhr eingestellt wird.

4. Spritzgusswerkzeug, umfassend
- mindestens eine formgebende Kavität (1) und
- mindestens eine elektrische Spule (2, 3),
wobei die Spule (2, 3) benachbart zu der Kavität (1) angeordnet ist und der Bereich des Werkzeugs, welcher zwischen der Spule (2, 3) und der Kavität (1) angeordnet ist, aus einem unmagnetischen und elektrisch nichtleitfähigen Material ausgebildet ist, **dadurch gekennzeichnet, dass** als Spule mindestens ein Helmholz-Spulen-Paar (2, 3) verwendet wird, und dass die Spulen (2,3) des Helmholtz-Spulen-Paares (2, 3) jeweils benachbart zu gegenüberliegenden Seiten der Kavität (1) angeordnet sind..

5. Spritzgusswerkzeug nach Anspruch 4, **dadurch gekennzeichnet, dass** das Werkzeug mindestens einen Werkzeugeinsatz (4, 5) aufweist, wobei der Werkzeugeinsatz (4, 5) zumindest einen Teil der Wandung der Kavität (4) bildet, wobei mindestens eine Spule (2, 3) in den Werkzeugeinsatz (4, 5) integriert oder integrierbar ist.

6. Spritzgusswerkzeug nach Anspruch 4 oder 5, **dadurch gekennzeichnet, dass** das Spritzgusswerkzeug zwei Werkzeugteile (A, B) zur Begrenzung der Kavität (1) umfasst, wobei jeweils mindestens eine Spule (2, 3) in ein Werkzeugteil (2, 3) integriert oder integrierbar ist.

7. Verwendung eines Spritzgusswerkzeugs nach einem der Ansprüche 4 bis 6 zur Herstellung eines Einkomponenten-Formteils und/oder eines Mehrkomponenten-Formteils.

## Claims

1. Injection-moulding process for producing a moulding with an injection mould, comprising at least one shaping cavity (1) and at least one electric coil (2, 3), wherein the coil (2,3) is arranged adjacent to the cavity (1), wherein
- a thermoplastic polymer, which comprises at least one electrically conducting and/or a magnetic filler, is used as injection-moulding material,
- the cavity (1) is at least partially filled with the injection-moulding material,
- and the injection-moulding material is heated in the cavity (1) by applying an alternating voltage to the coil (2, 3), **characterized in that** the coil used is at least one Helmholtz coil pair (2, 3), and **in that** the coils (2, 3) of the Helmholtz coil pair (2, 3) are each arranged adjacent to opposite sides of the cavity (1).

2. Injection-moulding process according to Claim 1, **characterized in that** the injection-moulding material is heated during the filling operation and/or subsequent to the filling operation and/or after the filling operation.

3. Injection-moulding process according to Claim 1 or 2, **characterized in that** the degree of heating is set by the frequency of the alternating voltage and/or by the current intensity and/or by the duration of the current supply.

4. Injection mould, comprising
- at least one shaping cavity (1) and
- at least one electric coil (2, 3),
wherein the coil (2, 3) is arranged adjacent to the cavity (1), and the region of the mould which is arranged between the coil (2, 3) and the cavity (1) is formed from a non-magnetic and electrically nonconductive material, **characterized in that** the coil used is at least one Helmholtz coil pair (2, 3), and **in that** the coils (2, 3) of the Helmholtz coil pair (2, 3) are each arranged adjacent to opposite sides of the cavity (1).

5. Injection mould according to Claim 4, **characterized in that** the mould has at least one mould insert (4, 5), wherein the mould insert (4, 5) forms at least part of the wall of the cavity (4), wherein at least one coil (2, 3) is integrated or can be integrated into the mould insert (4, 5).

6. Injection mould according to Claim 4 or 5, **characterized in that** the injection mould comprises two mould parts (A, B) to delimit the cavity (1), wherein in each case at least one coil (2, 3) is integrated or can be integrated into a mould part (2, 3).

7. Use of an injection mould according to one of Claims 4 to 6 for producing a one-component moulding and/or a multi-component moulding.

## Revendications

1. Procédé de moulage par injection pour la fabrication d'une pièce moulée avec un outil de moulage par injection, comprenant au moins une cavité (1) de transfert de forme et au moins une bobine électrique (2, 3), la bobine (2, 3) étant disposée adjacente de la cavité (1), en ce que
- un polymère thermoplastique, lequel comprend au moins une masse de remplissage électriquement conductrice et/ou magnétique, est utilisé comme matériau de moulage par injection,
- la cavité (1) est au moins partiellement remplie avec le matériau de moulage par injection,
- et le matériau de moulage par injection dans la cavité (1) est chauffé en appliquant une tension alternative à la bobine (2, 3), **caractérisé en ce que** la bobine utilisée est au moins une paire de bobines de Helmholtz (2, 3) et **en ce que** les bobines (2, 3) de la paire de bobines de Helmholtz (2, 3) sont respectivement disposées adjacentes à des côtés opposés de la cavité (1).

2. Procédé de moulage par injection selon la revendication 1, **caractérisé en ce que** le matériau de moulage par injection est chauffé pendant le remplissage et/ou à la fin du remplissage et/ou après le remplissage.

3. Procédé de moulage par injection selon la revendication 1 ou 2, **caractérisé en ce que** la profondeur du chauffage est réglée par la fréquence de la tension alternative et/ou par l'intensité du courant et/ou par la durée d'acheminement de courant.

4. Outil de moulage par injection comprenant
- au moins une cavité donnant la forme (1) et
- au moins une bobine électrique (2, 3),
la bobine (2, 3) étant disposée adjacente de la cavité (1) et la zone de l'outil qui se trouve entre la bobine (2, 3) et la cavité (1) étant constituée d'un matériau non magnétique et non conducteur d'électricité, **caractérisé en ce que** la bobine utilisée est au moins une paire de bobines de Helmholtz (2, 3) et **en ce que** les bobines (2, 3) de la paire de bobines de Helmholtz (2, 3) sont respectivement disposées adjacentes à des côtés opposés de la cavité (1).

5. Outil de moulage par injection selon la revendication 4, **caractérisé en ce que** l'outil possède au moins un insert d'outil (4, 5), l'insert d'outil (4, 5) formant au moins une partie de la paroi de la cavité (4), au moins une bobine (2, 3) étant intégrée ou pouvant être intégrée dans l'insert d'outil (4, 5).

6. Outil de moulage par injection selon la revendication 4 ou 5, **caractérisé en ce que** l'outil de moulage par injection comprend deux parties d'outil (A, B) destinées à délimiter la cavité (1), au moins une bobine (2, 3) étant respectivement intégrée ou pouvant respectivement être intégrée dans une partie d'outil (2, 3).

7. Utilisation d'un outil de moulage par injection selon l'une des revendications 4 à 6 pour fabriquer une pièce moulée à composante unique et/ou une pièce moulée à plusieurs composantes.
